# EUROPEAN PATENT APPLICATION

(11) **EP 2 907 932 A1**
(43) Date of publication of application: **19.08.2015**
(21) Application number: 13846106.6
(22) Date of filing: 22.08.2013
(51) Int. Cl.: E04B 1/41, F16B 13/00

(54) **CAST-IN ANCHOR CHANNEL HAVING SUB-ANCHOR**

(30) Priority: 11.10.2012 KR 20120113227
(71) Applicant: Sejong R&D Co., Ltd., Busan 609-823 (KR); Lee, Jae-Ho, Busan 609-825 (KR)
(72) Inventor: LEE, Jae-Ho, Busan 609-825 (KR)
(74) Representative: Rau, Schneck & Hübner Patentanwälte Rechtsanwälte PartGmbB
(86) International application number: PCT/KR2013/007536
(87) International publication number: WO 2014/058151

(57) **Abstract**

There is provided a cast-in anchor channel having a sub-anchor capable of fixing various external installations to a concrete structure after concrete is cured by being installed before concrete is poured during construction of the concrete structure including a building. A cast-in anchor channel (10) having a sub-anchor according to the present invention includes a channel (20), anchors (30) and sub-anchors (40), and can stably resist a shear load by being installed before the concrete is poured during the construction of the building so as to fix the various external installations to the concrete structure in future. In a method of constructing the anchor channel having a sub-anchor according to the present invention, when the sub-anchors (40) are detachably installed at the channel (20) or the anchors (20), the position in the vertical direction is fixed due to the use of the space (200), and the position in the horizontal direction is fixed due to the use of the sub-anchors (40). Thus, it is easy to construct the anchor channel by being independently fixed to placed steel reinforcements, and it is possible to quickly perform the construction in the field with a simple construction method.

## Description

### [Technical Field]

The present invention relates to a cast-in anchor channel having a sub-anchor, and more particularly, to a cast-in anchor channel having a sub-anchor capable of allowing an anchor channel to stably resist a shear load as well as a tensile load such that various external installations are fixed to a concrete structure after concrete is cured by being installed before the concrete is poured during the construction of the concrete structure including a building and facilitating the construction by being independently fixed to placed steel reinforcements.

### [Background Art]

An anchor channel or an anchor rail provide functions for fixing or easily separating various installations to or from a wall surface of a building, for example, fixation of a curtain wall of a building and various panels, fixation of a rail provided in a factory and a warehouse, fixation of a service wiring to a wall surface of a tunnel, and fixation of a chair in the gym, and, thus, application fields thereof have been expanded.

Such an anchor channel includes an anchor that is buried in concrete when the concrete is poured, and a channel buried in the concrete such that a guide space into which an external fastener such as a T bolt is inserted is exposed to the outside of the concrete. At this time, the channel is supported by the anchor to be stably fixed to the concrete, and the fastener is coupled to the channel later to fix various installations to a concrete wall surface. In general, the channel having a standardized shape and size is provided to be coupled to the fastener inserted from the outside.

In this case, unlike the channel having the standardized shape and size, in the anchor channel, various shapes of anchors are proposed. "Anchor rail" disclosed in Korean Patent Registration No. 10-0260341 proposes a technology in which an anchor rail for building construction includes one or more anchors protruding from an anchor rail, an anchor lower part that is coupled to the anchor rail in a shape fitting manner, and one attachment part that is positioned at a free end formed a shank of the anchor, and the shank of the anchor is at least manufactured as a tube having a predetermined length.

"Integrated channel buried in concrete structure" disclosed in Korean Patent Registration No. "10-0712233" proposes a technology in which a channel includes a bolt that is fastened to a bracket supporting a supporting target; a body whose upper ends at both sides are inclined to protrude toward the inside in order to prevent the bolt from being separated; and a support that is integrally formed with a bottom surface of the body to prevent the body from being pulled out, and the channel is buried in building structures such as a slab and a wall.

"Anchor rail" disclosed in Korean Patent Publication No. 10-2010-0070297 suggests a technology in which an anchor rail includes a rail body, the rail body is provided with an accommodating space for accommodating a fastening component for fixing a fixation element to the anchor rail, the rail body is provided with a hole, and a coupling component for fixing an anchor element to the rail body is provided within the hole. In addition, the coupling component is formed as a rivet, a fixation section of the rivet inserted into the hole is expanded to fix the rivet to the rail body, and the rivet is provided with a fixing means for fixing the anchor element to the rail body.

"Method for manufacturing improved buried-type channel for fixing fastener" disclosed in Korean Patent Registration No. 10-0995121 suggests a technology in which a channel includes a channel in which both sides at an opened top are rounded inward so as to prevent an inserted T bolt from being separated; and a plurality of anchors that is integrally joined to a bottom surface of the channel in a line, and the anchor includes a main body in which one end is integrally joined to a lower part of the channel to have a steel bar shape; and a disc-shaped support that is integrally formed at the other end of the main body.

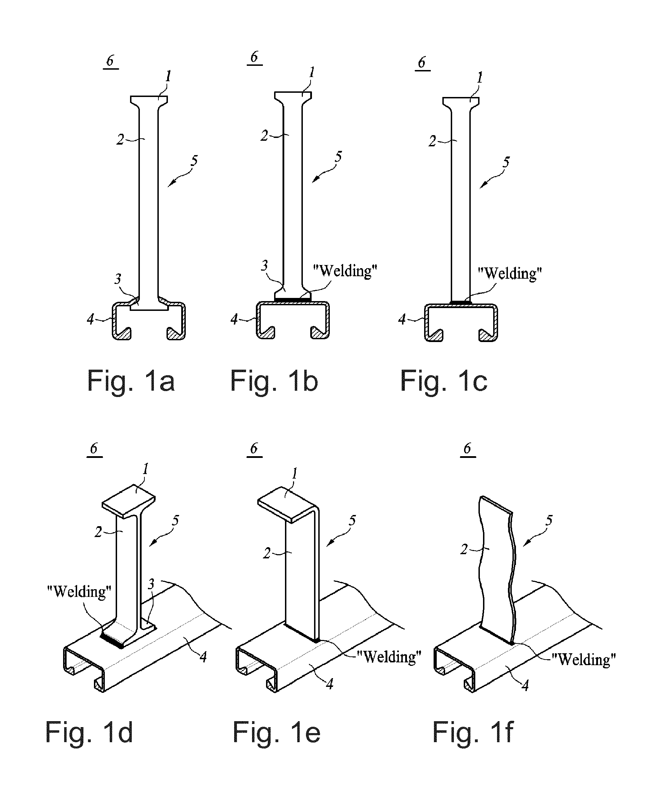

Fig. 1 is a diagram for describing anchor channels that are generally used.

Referring to Fig. 1, in an anchor 5 of an anchor channel 6, anchor heads 1 and 3 are integrally formed at both ends of a stem 2 through rolling as shown in (a) of Fig. 1, holes for joining rivets are formed in a channel 4, and then the anchor heads 3 coupled to the channel 4 are joined through rivet-forging. Further, as shown in (b) of Fig. 1, anchor heads 1 and 3 are integrally formed at both ends of a stem 2 through rolling, and an end of one anchor head 3 is welded to a channel 4 along a rim. As shown in (c) of Fig. 1, an anchor head 1 is integrally formed at one end of a stem 2 through rolling, and the other end is welded to a channel 4 through stud-welding. As shown in (d) of Fig. 1, an integrated anchor 5 formed by cutting section shape steel produced through rolling is applied, and one end of the section shape steel is welded to a channel 4 along a rim similarly to (b) of Fig. 1. As shown in (e) of Fig. 1, a steel material bent in a "¬" shape is applied to an anchor head 1 and a stem 2, and a vertical end is welded to a channel 4. A steel material 2 bent in a wavy shape is welded to a channel 4 as shown in (f) of Fig. 1.

The configuration of the anchor channel 6 is largely divided into the channel 4 and the anchor 5. An existing standard product is typically used as the channel 4, and the anchor 5 is divided into various types of anchor channels depending on geometrical features of the anchor heads 1 and 3 and the stem 2 or coupling methods. The anchor has a great influence on anchorage performance of the anchor channel and producible standards and cost.

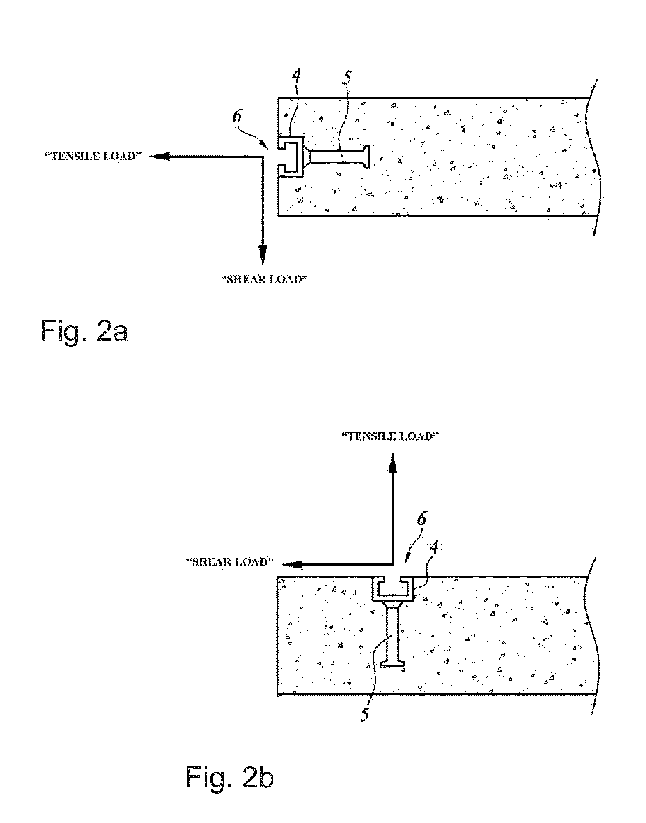

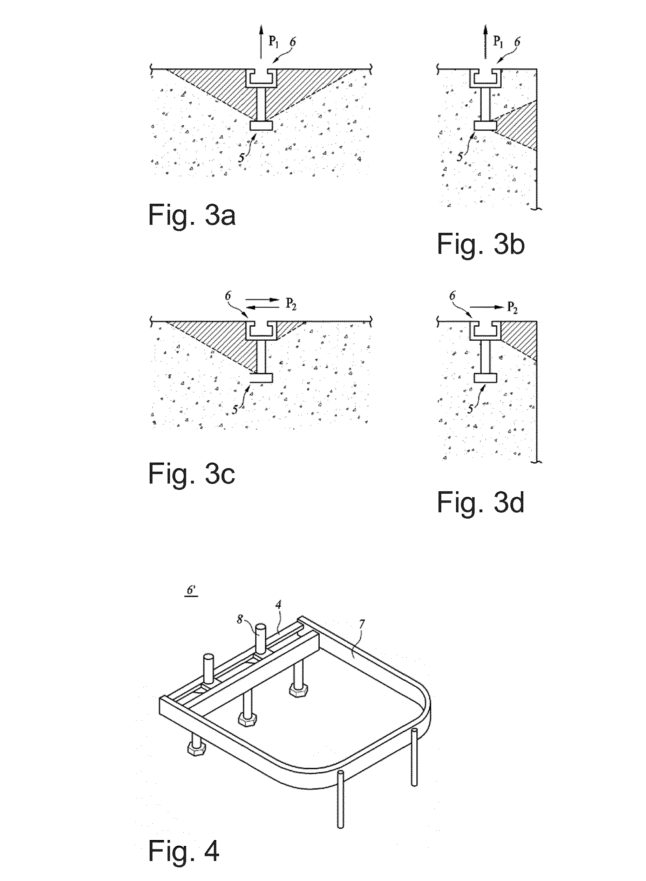

Figs. 2 and 3 are diagrams for describing a load that is generally applied to an anchor channel and a breakout form of concrete, Fig. 2 is a diagram showing an applying direction of the load depending on an installation position of the anchor channel, and Fig. 3 is a diagram for describing the breakout form of the concrete occurring by tensile and shear loads applied to the anchor channel.

As shown in Fig. 2, a tensile load and a shear load are complexly applied to an anchor channel 6 provided at a concrete structure due to an installation coupled to a rail 4 in view of utilization characteristics thereof. As shown in Fig. 3, the tensile load and the shear load tend to cause concrete breakout. That is, the anchor channel 6 is generally provided on side surfaces of the structure as shown in (a) of Fig. 2 or upper and lower surfaces of the structure as shown in (b) of Fig. 2. In either case, a tensile load P₁ applied in parallel with a channel 4 and an anchor 5, a shear load P₂ applied in a vertical direction are applied to the anchor channel. For this reason, as shown in Fig. 3, the breakout of the concrete occurs in the concrete structure. In this case, as a breakout mode of the anchor due to the tensile load applied to the anchor channel 6, there are anchor pulling-out occurring within the structure, concrete breakout ((a) of Fig. 3), side-face blowout ((b) of Fig. 3), and splitting in addition to the breakout of an anchor steel material. Further, as a breakout of the anchor due to the shear load applied to the anchor channel 6, there are concrete pry-out ((c) of Fig. 3) and concrete breakout ((d) of Fig. 3) occurring in the side surface of the structure, in addition to the breakout of the anchor steel material.

In general, the anchor channel 6 is primarily disposed at an outer edge of the structure in order to fix an external installation, and thus, an applying effect can be maximized. However, the anchor channel 6 according to the related art has a problem that there is no anchoring method for the shear load unlike the tensile load anchored by the anchor 5 provided by being fixed within the concrete. Finally, in order to prevent the breakout due to the shear load described above, when the anchor channel is constructed by being retracted inward the structure or a reinforcing bar (anchor bar) is additionally placed in the field, there is a problem that applicability of the anchor channel 6 in the field is reduced or the placement work of the reinforcing bar in the field is difficult.

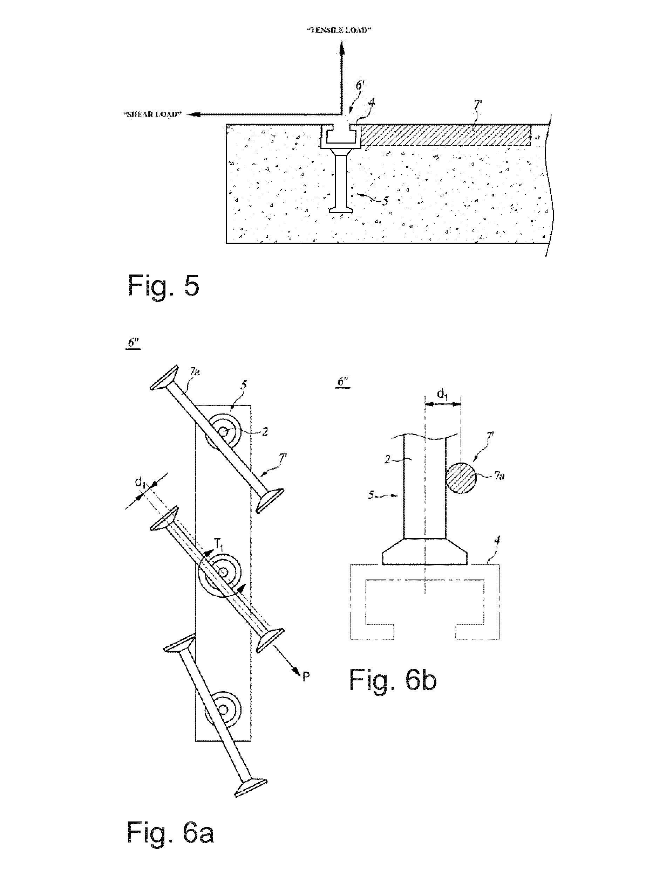

In order to improve such problems, Fig. 4 is a diagram showing another example of the anchor channel according to the related art, and Fig. 5 is a diagram for describing a problem of the anchor channel shown in Fig. 4.

Referring to Fig. 4, when the shear load is applied to the general anchor channel described above, there is a problem that since the concrete breakout occurs, it is difficult to provide the anchor channel at a position close to the outer edge of the structure. In order to solve the problem, an anchor channel 6' in which a steel band 7 connecting both ends of the channel 4 to which stators 8 of the external installation are coupled is used is proposed. In the anchor channel 6', since the channel 4 and the steel band 7 are coupled to each other so as to be closed, and both ends of the steel band 7 are attached to the both ends of the channel 4, anchorage ability against the shear load is ensured through the steel band 7. Thus, a separate design (a placement design for resisting the shear load) for resisting the shear load is not needed in comparison with the anchor channel described above, and it is possible to prevent a construction failure caused by omitting a reinforcing structure at the time of the construction.

However, the anchor channel 6' has an advantage that the concrete breakout due to the shear load can be reduced in comparison with the anchor channel 6 according to the related art, but there are many problems to be improved. That is, as shown in Figs. 4 and 5, since the steel band 7 is fixed to the both ends of the channel 4, the anchor channel 6' is exposed from a concrete surface or is buried with a height lower than the concrete surface, and thus, it is difficult to ensure a concrete covering thickness. For this reason, there are problems that the corrosion of the steel band 7 is not prevented, and the original function of the anchor channel is not existed due to the damage of the steel band 7 in case of fire. Furthermore, since the steel band 7 that absorbs the shear load has an anchored portion in a region of the concrete covering thickness, the anchorage ability is weak, and it is easy to separate the covered concrete from this portion. In this case, there is a problem that the anchorage ability of the anchor channel against the shear load is suddenly lost. Moreover, since the steel band 7 is coupled to the both ends of the channel 6, the steel band is considerably separated from the stators 8 of the external installation to which the shear load is applied, and thus, it is difficult to effectively ensure supporting force.

Fig. 6 is a diagram for describing another example of the anchor channel according to the related art and a problem thereof, (a) of Fig. 6 is a bottom view of the anchor channel, and (b) of Fig. 6 is a diagram showing a cross section relationship between a stem 2 of the anchor 5 and a stem 7a of a crossing anchor 7' in (a) of Fig. 6.

Referring to Fig. 6, when the shear load is applied to the anchor channel as described above, the concrete breakout occurs due to the shear load in some cases. As a countermeasure for overcoming such a problem, an anchor channel 6" in which a stud-shaped anchor 5 is provided in parallel with the channel 4 and a stud-shaped crossing anchor 7' is provided at the stem 2 of the anchor 5 in order to ensure the anchorage ability against tensile stress is proposed.

However, in the method of providing the stud-shaped crossing anchor 7', a torque moment T₁ (P x d₁) due to an eccentricity d₁ caused in a crossing portion with the stem 2 of the anchor 5 due to the shear load P applied to the crossing anchor 7' is greatly generated, and thus, there is a problem that the anchorage ability against the shear load is reduced. In the related art, when the stem 2 (a bar steel shape) of the anchor 5 and the stem 7a of the crossing anchor 7 (a bar steel shape) are firmly coupled to each other, a welding work is difficult due to the form of the crossing portion, and it is difficult to ensure quality of a fixing work. Especially, since the welding work in the field is more difficult, the anchor channel is primarily manufactured in advance in the factory and is transported. Thus, quality in a welded portion may be degraded due to an excessive volume at the time of the transportation due to the shape of a product and impact damage of the welded portion before the anchor channel is installed in the field. Moreover, since interference with the previously constructed steel reinforcements due to the crossing anchor 7' that is previously fixed at the time of installing the anchor channel in the field occurs, there is a disadvantage that the anchor channel is not constructed by a post-constructing method (a method of installing the anchor channel after the steel reinforcements are constructed.)

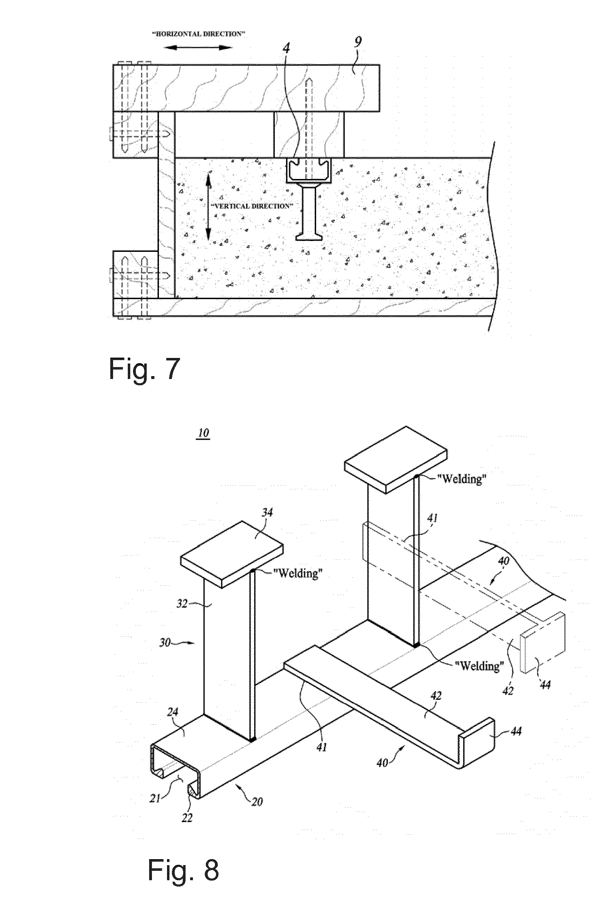

Fig. 7 is a diagram for describing an example of the method of constructing the anchor channel according to the related art.

Referring to Fig. 7, there is a problem that it is difficult to construct the anchor channel 6. That is, in the anchor channel 6 according to the related art, it is necessary to fix a casting mold and the anchor channel using an auxiliary material (wooden lumber), there are problems that it is not convenient to fix a wooden lumber 9 and it is difficult to install and disassemble the casting mold for pouring the concrete. Especially, since a recent casting mold is primarily manufactured using metal such as aluminum so as to be repeatedly used, the fixing method of the anchor channel 6 has a problem that a material of the casting mold is greatly wasted.

### [Disclosure]

### [Technical Problem]

In order to solve the problems of the related art, an object of the present invention is to provide a cast-in anchor channel having a new type of sub-anchor capable of allowing an anchor channel to stably resist a shear load such that various external installations are fixed to a concrete structure after concrete is cured by being installed before the concrete is poured during the construction of the concrete structure including a building.

Another object of the present invention is to provide a cast-in anchor channel having a new type of sub-anchor capable of facilitating the construction by being independently fixed to placed steel reinforcements during the construction of the anchor channel capable of fixing various external installations to the concrete structure after the concrete is cured by being installed before the concrete is poured during the construction of the concrete structure including a building.

Particularly, still another object of the present invention is to provide a cast-in anchor channel having a new type of sub-anchor capable of exhibiting improved anchorage performance for resisting a share load against concrete breakout modes occurring during the coupling of the anchor channel to the concrete structure such as concrete breakout, anchor pulling-out, side-face blowout, concrete pry-out or splitting by additionally providing an improved unit for exhibiting anchorage performance against a shear load (tensile load and shear load) in addition to an existing anchorage ability against a tensile load in comparison with the related art, and performing the construction in the field with a simple construction method at the time of providing the anchor channel capable of fixing various external installations to the concrete structure in future by being installed before the concrete is poured during the construction of the building.

Further, still another object of the present invention is to provide a cast-in anchor channel having a new type of sub-anchor capable of further improving anchorage performance, increasing manufacturing convenience and increasing manufacturing cost competitiveness when a unit for exhibiting anchorage performance against the shear load according to the related art is provided.

### [Technical Solution]

In order to achieve the above object, according to the present invention, there is provided an anchor channel having a sub-anchor that fixes various external installations to a concrete structure in future by being installed before concrete is poured during construction of a building. The anchor channel includes: a channel (20) that includes an upper surface (22), a lower surface (24), and a guide space (21) formed by being open in the upper surface (22) such that a fastening tool of the external installation is moved in a longitudinal direction, and is installed by being buried in the concrete such that the guide space 21 is exposed to the outside of the concrete; an anchor (30) that is coupled to the channel (20) so as to extend toward the lower surface (24) of the channel (20), and resists a tensile load by being buried in the concrete during the pouring of the concrete; and a sub-anchor (40) that includes a sub-stem (42) which is coupled to at least one of the anchor (30) and the lower surface (24) of the channel (20) in a position under the lower surface (24) of the channel (20), and a sub-anchor head (44) which is installed at an end of the sub-stem (42), and resists a shear load by being buried in the concrete during the pouring of the concrete. Coupling of the sub-stem (42) to the lower surface (24) of the channel (20) and the anchor (30) is performed through surface contact by forming coupled portions (41) of the sub-stem (42) to the lower surface (24) of the channel (20) and the anchor (30) as a flat surface.

In the cast-in anchor channel having a sub-anchor according to the present invention described above, the sub-stem (42) may be made of an integrated plate material.

In the cast-in anchor channel having a sub-anchor according to the present invention described above, the anchor (30) may include a stem plate (32) that is made of a plate material and is vertically coupled to the lower surface (24) of the channel (20) through welding, and the sub-stem (42) may be coupled to the stem plate (32) of the anchor (30).

The cast-in anchor channel having a sub-anchor according to the present invention described above may further include a fastening unit (50) that allows the sub-anchor (40) to be detachably coupled to the lower surface (24) of the channel (20) and the anchor (30) coupled to the sub-anchor (40).

In the cast-in anchor channel having a sub-anchor according to the present invention described above, the fastening unit (50) may include a first hole (52) that is formed in the anchor (30) and the lower surface (24) of the channel (20), a second hole (54) that is formed in the sub-stem (42) so as to correspond to the first hole (52), and a fastening tool (56) that allows the sub-stem (42) to be coupled to the channel (20) or the anchor (30) by fixing the sub-stem (42) to the lower surface (24) of the channel (20) or the anchor (30) through the first hole (52) and the second hole (54).

In order to achieve the above object, according to the present invention, there is provided an anchor channel having a sub-anchor that fixes various external installations to a concrete structure in future by being installed before concrete is poured during construction of a building. The anchor channel includes: a channel (20) that includes an upper surface (22), a lower surface (24), and a guide space (21) formed by being open in the upper surface (22) such that a fastening tool of the external installation is moved in a longitudinal direction, and is installed by being buried in the concrete such that the guide space (21) is exposed to the outside of the concrete; an anchor (30) that is coupled to the channel (20) so as to extend toward the lower surface (24) of the channel (20), and resists a tensile load by being buried in the concrete during the pouring of the concrete; a sub-anchor (40) that includes a sub-stem (42) which is coupled to at least one of the anchor (30) and the lower surface (24) of the channel (20) in a position under the lower surface (24) of the channel (20), and a sub-anchor head (44) which is installed at an end of the sub-stem (42), and resists a shear load by being buried in the concrete during the pouring of the concrete; and a fastening unit (50) that allows the sub-anchor (40) to be detachably coupled to the lower surface (24) of the channel (20) and the anchor (30) coupled to the sub-anchor (40).

In the cast-in anchor channel having a sub-anchor according to the present invention described above, the fastening unit (50) may include a first hole (52) that is formed in the anchor (30) and the lower surface (24) of the channel (20), a second hole (54) that is formed in the sub-stem (42) so as to correspond to the first hole (52), and a fastening tool (56) that allows the sub-stem (42) to be coupled to the channel (20) or the anchor (30) by fixing the sub-stem (42) to the lower surface (24) of the channel (20) or the anchor (30) through the first hole (52) and the second hole (54).

In the cast-in anchor channel having a sub-anchor according to the present invention described above, the first hole (52) and the second hole (54) may be formed in coupled portions 41 of the sub-stem (42) to the lower surface (24) of the channel (20) and the anchor (30), and coupling of the sub-stem (42) to the lower surface (24) of the channel (20) and the anchor (30) may be performed through surface contact by forming the coupled portions (41) as a flat surface.

### [Effect of the Invention]

According to the cast-in anchor channel having a sub-anchor according to the present invention, since the anchor 30 for resisting the tensile load and the improved sub-anchor 40 for resisting the shear load are provided, the anchorage ability of the anchor channel 10 is improved, and thus, it is possible to effectively prevent the concrete breakout in a direction of the shear load. Particularly, since the improved sub-anchor 40 as a unit for exhibiting the anchorage performance against the shear load is provided in addition to the existing anchorage ability against the tensile load in comparison with the related art, it is possible to more effectively prevent the concrete breakout occurring during the coupling of the anchor channel to the concrete structure such as concrete breakout, anchor pulling-out, side-face blowout, concrete pry-out or splitting. According to the present invention, since the plate material is used as the sub-anchor 40 for improving the anchorage performance against the shear load, there are advantages that a more stable structure against the shear load is provided, it is easy to manufacture the sub-anchor 40, and the unit price of the product can be reduced in comparison with the related art. When the cast-in anchor channel having a sub-anchor according to the present invention is configured such that the sub-anchor 40 is detachably coupled to the channel 20 or the anchor 30, by fixing the position in the vertical direction due to the use of the space 200 and fixing the position in the horizontal direction due to the use of the sub-anchor 40, it is easy to construct the anchor channel by independently fixing the anchor channel in the placed steel reinforcements, and the construction in the field is quickly performed with a simple construction method.

### [Description of Drawings]

Fig. 1 is a diagram for describing an anchor channel used in general.
Figs. 2 and 3 are diagrams for describing a load that is generally applied to the anchor channel and a breakout form of concrete.
Fig. 4 is a diagram showing another example of the anchor channel according to the related art.
Fig. 5 is a diagram for describing a problem of the anchor channel shown in Fig. 4.
Fig. 6 is a diagram for describing another example of the anchor channel according to the related art and a problem thereof.
Fig. 7 is a diagram for describing an example of a method of constructing the anchor channel according to the related art.
Figs. 8 and 9 are diagrams for describing a cast-in anchor channel having a sub-anchor according to the technical spirit of the present invention.
Fig. 10 is a diagram for comparing the cast-in anchor channel having a sub-anchor according to the technical spirit of the present invention with the related art.
Figs. 11 to 14 are diagrams for describing a cast-in anchor channel having a sub-anchor according to a preferred embodiment of the present invention and a construction form thereof.
Fig. 15 is a diagram for describing a modification example of a sub-anchor when a stud-shaped anchor is provided in the cast-in anchor channel having a sub-anchor according to a preferred embodiment of the present invention.
Fig. 16 is a diagram for describing other modification examples of the sub-anchor applied to the anchor channel.
Fig. 17 is a diagram for describing a method of constructing the cast-in anchor channel having a sub-anchor according to the preferred embodiment of the present invention.

### [Best Mode]

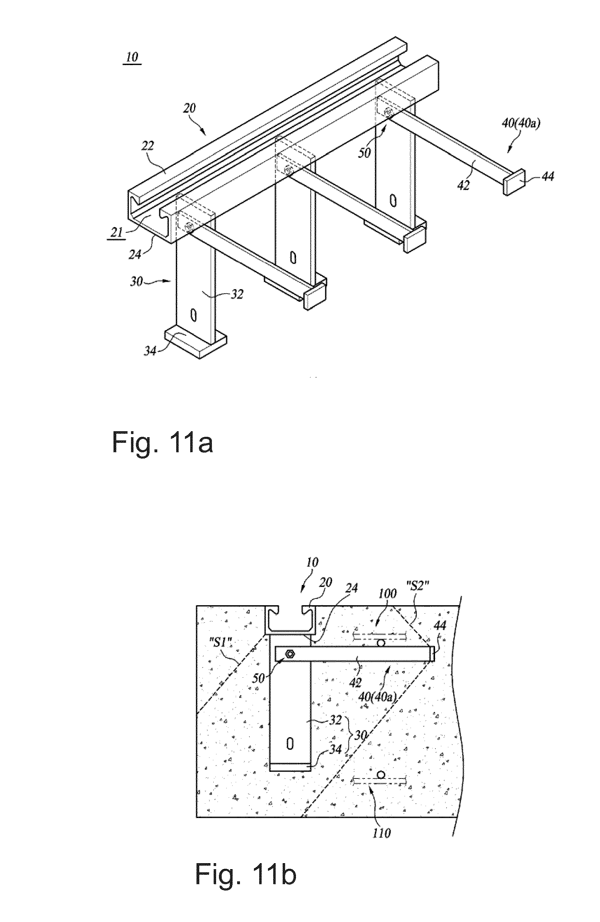

Hereinafter, preferred embodiments of the present invention will be described in detail with reference to Figs. 11 to 17, and components that perform the same functions in Figs. 8 to 17 will be assigned the same reference numerals. Meanwhile, the detailed description for a technology that can be easily applied by those skilled in the art from a technology related to a general anchor channel and a construction method thereof will be omitted in the drawings. The drawings may be illustrated such that a size ratio between components is slightly different or a size between components that are coupled to each other is different, but since an expression difference in the drawings is easily understood to those skilled in the art, the separate description thereof will be omitted.

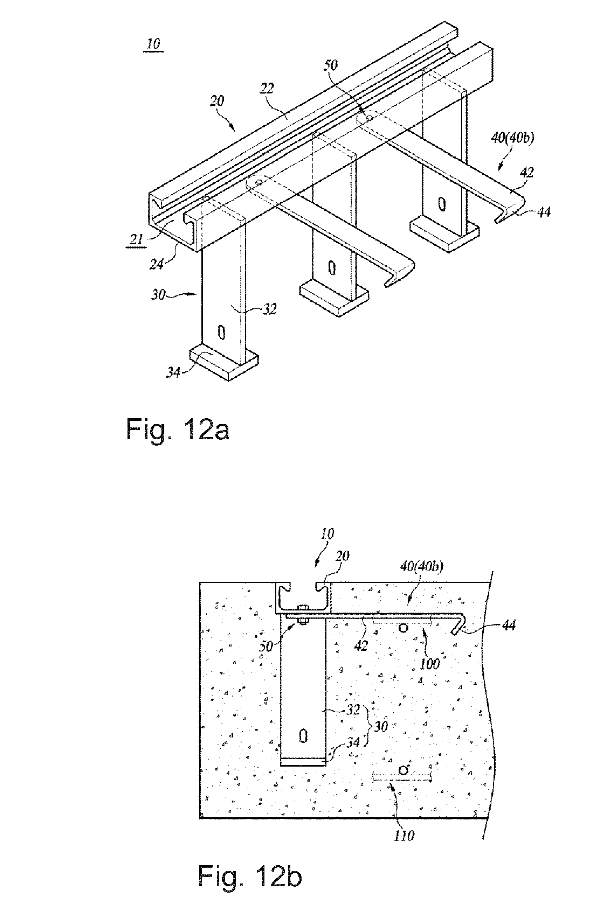

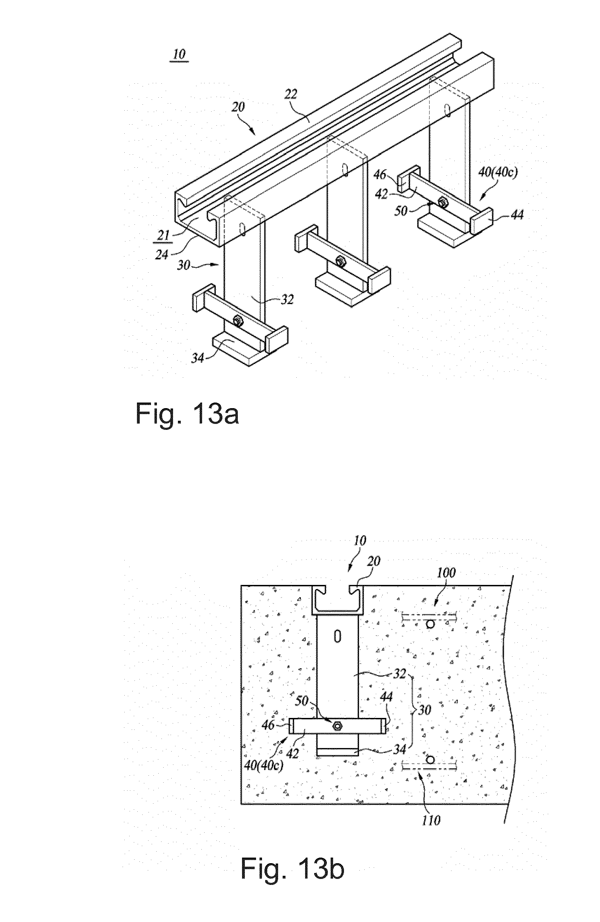

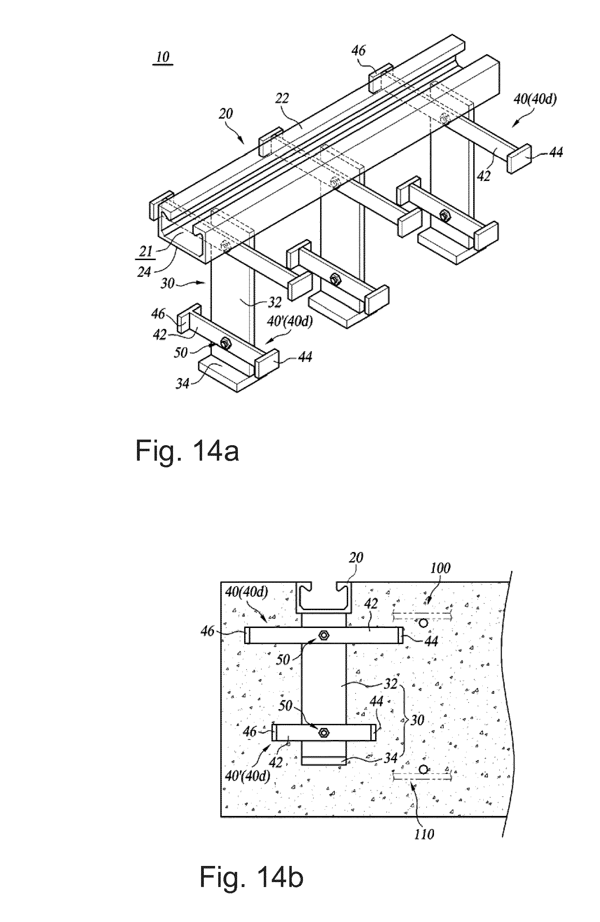

Figs. 11 to 14 are diagrams for describing a cast-in anchor channel having a sub-anchor and a construction form thereof according to the preferred embodiment of the present invention. In this case, Fig. 11 shows an example of a sub-anchor at which a sub-stem is disposed in one direction of the channel, Fig. 12 shows another case where the sub-stem is disposed in the same direction as that of in Fig. 11 but a different sub-anchor head is provided, Fig. 13 shows an example of a sub-anchor at which a sub-stem is disposed in both directions of the channel, and Fig. 14 shows an example in which a sub-stem is disposed in the same manner as that of Fig. 13 and sub-anchors are vertically provided in multiple rows. (a) of Fig. 11 to (a) of Fig. 14 are perspective views of the cast-in anchor channel having a sub-anchor according to the preferred embodiments, and (b) of Fig. 11 to (b) of Fig. 14 are diagrams showing a state in which the anchor channel of (a) is installed in the concrete structure.

Referring to Figs. 11 to 14, a cast-in anchor channel 10 having a sub-anchor according to the present invention includes a channel 20, anchors 30, and sub-anchors 40, and is installed before concrete is poured during construction of a building so as to fix various external installations to a concrete structure. Particularly, by including the anchors 30 for resisting a tensile load and the sub-anchors 40 for resisting a shear load, the cast-in anchor channel 10 having a sub-anchor according to the present invention has a technical feature of preventing the breakout of the concrete caused at the time of coupling the anchor channel to the concrete structure, such as concrete breakout, anchor pulling-out, side-face blowout, concrete pry-out, or splitting.

In the present invention described above, the channel 20 includes an upper surface 22, a lower surface 24, and a guide space 21 formed by being open in the upper surface 22 such that a fastening tool of the external installation can be moved in a longitudinal direction, and is buried in the concrete such that the guide space 21 is exposed to the outside of the concrete. The anchors 30 are coupled to the channel 20, and resist a tensile load by extending toward the lower surface 24 of the channel 20 so as to be buried within the concrete during the pouring of the concrete. The sub-anchor 40 includes a sub-stem 42 coupled to at least one of the lower surface 24 of the channel 20 and the anchor 30 in a position under the lower surface 24 of the channel 20, and resists a shear load by being buried within the concrete during the pouring of the concrete.

In general, anchor strength needs to consider all breakout modes occurring by strength (concrete breakout) related to a buried portion of the anchor as well as strength of a steel material. It is easy to relatively calculate the strength of the steel material of the anchor. However, except for a case where the anchor is intentionally designed such that strength of a ductile steel material dominates a design of a connection part, the strength of the steel material does not generally dominate the design of the connection part. As the breakout mode related to the buried portion of the anchor, there are concrete breakout, anchor pulling-out, side-face blowout, concrete pry-out, and splitting. When these breakout modes are represented in view of a load applied to the anchor, as a breakout mode of the anchor by a tensile load, there are steel material breakout, pulling-out breakout, side-face blowout, and splitting, and as a breakout mode of the anchor by a shear load, there are steel material breakout, pry-out, and concrete breakout. In general, the anchor channel resists the tensile load through the anchors but does not have a structure for resisting the shear load. Here, the anchor channel slightly resists the shear load by side surfaces of the channel buried in the concrete. Thus, the cast-in anchor channel 10 having a sub-anchor according to the present invention can effectively prevent steel material breakout, pry-out, and concrete breakout by resisting the shear load through the sub-anchors 40.

Meanwhile, in the present invention, the tensile load and the shear load may be a single load or a combined load represented as the sum of several loads. That is, in the present invention, the tensile load refers to a single load or a combined load resisted by the anchors 30, and the shear load refers to a single load or a combined load resisted by the sub-anchors 40. Accordingly, in the present invention, the sub-anchors 40 and the anchors 30 are preferably perpendicular to each other. Naturally, since the sub-anchors 40 are set against the shear load applied to the anchors 30, the sub-anchors 40 may be coupled to the anchors 30 with a predetermined angle (in parallel with the greatly caused shear load) when necessary.

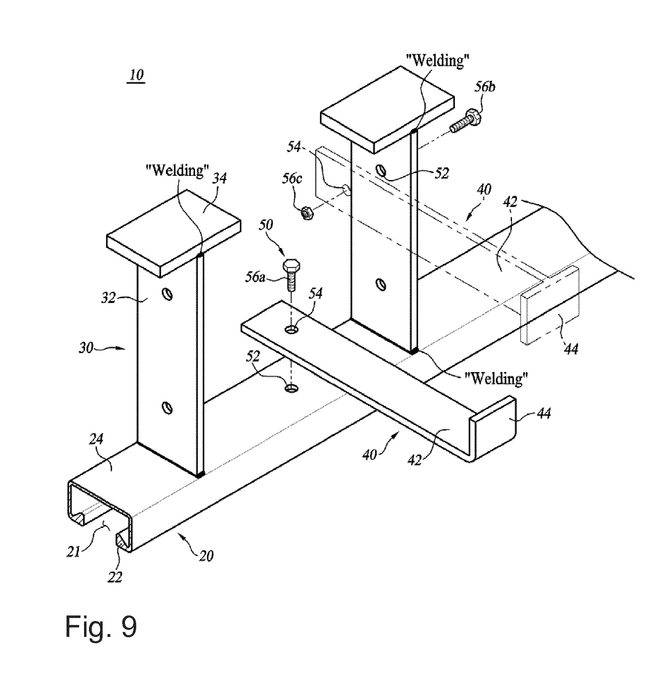

In the cast-in anchor channel 10 having a sub-anchor according to the present invention, the anchor shown in Figs. 8 and 9 may be applied to the anchor 30, or various types of anchors according to the related art shown in Fig. 1 may be similarly applied to the anchor.

As stated above, the cast-in anchor channel 10 having a sub-anchor according to the present invention has a feature of resisting the shear load by having a sub-anchor function through the sub-anchors 40 and a main anchor function of the anchors 30. Particularly, since the sub-anchor 40 is installed in an arbitrary position of the anchor 30 or the lower surface of the channel 20, the anchor channel has improved resistance performance against torque or other loads.

Accordingly, unlike the general anchor channel shown in Fig. 1, the cast-in anchor channel having a sub-anchor according to the present invention does not need to use an additional reinforcing bar (hairpin or anchor bar) for preventing concrete breakout or splitting. The anchor channel 6' in another example of the anchor channel according to the related art shown in Fig. 4 has a disadvantage that a covering thickness regulation is not satisfied due to the use of the steel band 7 connected to the both ends of the channel 4. Since the anchored portion of the steel band 7 is positioned in the covering thickness region, the anchorage ability is reduced, and when the covered concrete is separated, there is a problem that the anchorage ability is sharply lost. When the anchor bar is additionally used in the field, since the anchor bar is not directly fixed to the channel 4, an anchoring effect is reduced. However, since the cast-in anchor channel having a sub-anchor according to the present invention can stably resist the shear load by the sub-anchors 40, the anchor channel 10 can be installed close to an edge of the concrete structure, and thus, the anchor channel can be more conveniently used during the installing of the building.

Referring again to Figs. 11 to 14, the cast-in anchor channel 10 having a sub-anchor according to the preferred embodiment of the present invention includes the channel 20, the anchors 30 and the sub-anchors 40. In this case, the channel 20 includes the upper surface 22, the lower surface 24, and the guide space 21 formed by being open in the upper surface 22 such that the fastening tool of the external installation can be moved in the longitudinal direction, and is buried in the concrete such that the guide space 21 is exposed to the outside of the concrete. The anchors 30 are coupled to the channel 20, and resist the tensile load by extending toward the lower surface 24 of the channel 20 so as to be buried within the concrete during the pouring of the concrete. Naturally, the technology applied to various anchor channels of the related art shown in Fig. 1 may be applied to the anchors 30 and the channel 20 of the anchor channel 10 described above.

The cast-in anchor channel 10 having a sub-anchor according to the preferred embodiment of the present invention includes the sub-anchors 40 for resisting the shear load, and the sub-anchors 40 are formed in a detachable type by forming coupled portions 41 as a flat surface as shown in Fig. 8 and providing a fastening unit 50 as shown in Fig. 9.

The sub-anchor 40 can resist the shear load by including the sub-stem 42 coupled to one of the lower surface 24 of the channel 20 and the anchor 30 in the position under the lower surface 24 of the channel 20 so as to be buried in the concrete. By doing this, it is possible to effectively ensure supporting force against the shear load in comparison with the related art, and sufficient supporting force is ensured especially at the edge of the concrete structure. For example, Fig. 11 shows an example in which the fastening unit 50 is provided such that a sub-anchor 40a is coupled to an upper side of a stem plate 32 of the anchor 30, Fig. 12 shows an example in which the fastening unit 50 is provided such that a sub-anchor 40b is coupled to the lower surface 24 of the channel 20, Fig. 13 shows an example in which the fastening unit 50 is provided such that a sub-anchor 40c is coupled to a lower side of the stem plate 32 of the anchor 30, and Fig. 14 shows an example in which the fastening units 50 are provided in upper and lower sides of the stem plate 32 of the anchor 30 such that a pair of sub-anchors 40d is arranged on the upper and lower sides of the stem plate 32 of the anchor 30. Naturally, the fastening unit 50 may be provided as shown in Fig. 9.

In the cast-in anchor channel 10 having a sub-anchor according to the preferred embodiment of the present invention, the sub-anchors 40 are coupled to the stem plates 32 of the anchors 30, or coupled to the lower surface 24 of the channel 20. In this case, the number of sub-anchors 40 may be different depending on a utilization condition such as a coupling position or the form of the shear load to resist. For example, as shown in Figs. 11 and 13, the number of sub-anchors 40 is the same as the number of stem plates 32 of the anchors 30 when the sub-anchors are coupled to the stem plates 32 of the anchors 30 and are coupled to the stem plates 32 one by one. As shown in Fig. 12, when the sub-anchors are coupled to the lower surface 24 of the channel 20, the sub-anchors 40 are preferably arranged between the stem plates 32 of the anchors 30, and in this case, the number of sub-anchors is less than the number of anchors 30 by one. As shown in Fig. 14, when the sub-anchors 40 are coupled to the upper and lower surfaces of the stem plates 32 of the anchors 30, the number of sub-anchors 40 is a multiple of the number of anchors 30. That is, in the cast-in anchor channel 10 having a sub-anchor according to the preferred embodiment of the present invention, the number and position of the installed sub-anchors 40 may be variously applied depending on designer's needs.

Accordingly, since the anchor channel 10 according to the present embodiment can effectively improve the concrete breakout ("S1" and "S2" in Fig. 11) due to the shear load through the sub-anchors 40, a work load due to the additional anchor bar is removed, and the anchor channel can be conveniently constructed at the edge of the concrete structure without concern about the concrete breakout. As a result, it is possible to maximize the original function of the anchor channel 10.

The anchor 30 of the anchor channel 10 according to the present embodiment includes a stem plate 32 and an anchor head 34. Here, one end of the stem plate 32 is coupled to the lower surface 24 of the channel 20, and the stem plate vertically extends downward from the lower surface 24 of the channel 20. The anchor head 34 is installed at the other end of the stem plate 32 so as to have a head area greater than a cross section area of the stem plate 32. Naturally, as the structure of the anchor channel 10, various types supposed in the art may be selectively applied as shown in Fig. 1.

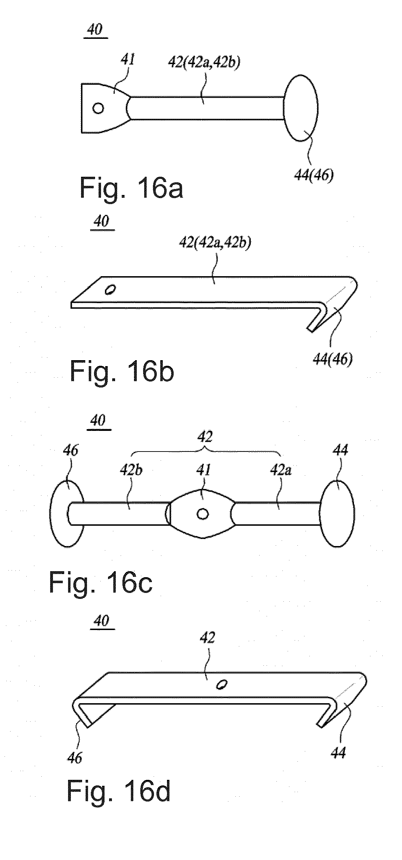

In the cast-in anchor channel 10 having a sub-anchor according to the preferred embodiment of the present invention, the sub-anchor 40 includes a sub-anchor head 44 having the same effect as that of the anchor head 34 of the aforementioned anchor 30. The sub-anchor head 44 has the same function as that of the anchor head 34 of the aforementioned anchor 30 by being coupled to an end of the sub-stem 42. Here, the sub-anchor head 44 is installed so as to have the head area greater than the cross section area of the sub-stem 42, and various types shown in Figs. 1 and 11 to 16 may be selectively used. For example, Figs. 11 and 12 show an example in which the sub-stem 42 extends in one direction (direction opposite to a direction in which the shear load is applied), the fastening unit 50 is provided at one end of the sub-stem 42, and the sub-anchor head 44 is installed at the other end of the sub-stem 42. Figs. 13 and 14 show an example in which the sub-stem 42 of the sub-anchor 40 extends in both directions of the channel 20 and the sub-anchor heads 44 installed to have the head area greater than the cross section area of the sub-stem 42 are installed at both ends of the sub-stem 42. Figs. 11, 13, 14 and 15 show an example in which the sub-anchor head 44 is formed in the form shown in Fig. 8, Fig. 12 shows an example in which the entire length of the sub-stem 42 is formed using a single flat plate material and an end of the sub-stem 42 is bent, and Fig. 16 shows another example of the sub-anchor head 44.

As stated above, in the present embodiment, the sub-anchor 40 has various shapes that can be selectively applied by the designer depending on the magnitude and direction of the shear load. It is possible to improve the anchorage ability that is generally obtained by the anchor head by forming the sub-anchor head 44 at the end of the sub-stem 42 in the extending direction.

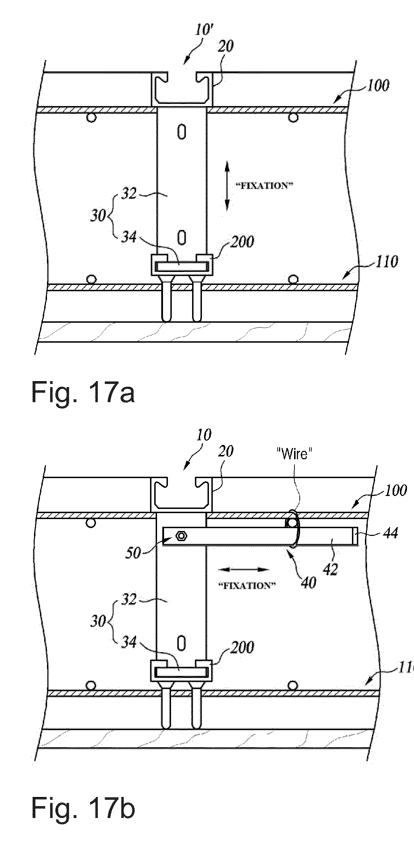

Meanwhile, the fastening unit 50 is fixed to the sub-anchor 40 of the cast-in anchor channel 10 having a sub-anchor according to the present embodiment through welding. However, since the anchor channel is preferably coupled to the anchor 20 and the lower surface 24 of the channel 20 so as to be separated, the anchor channel is assembled with the anchor and the lower surface of the channel when necessary. Thus, as shown in Fig. 17, there is an advantage that the sub-anchors 40 are conveniently constructed by installing an anchor channel 10' including the channel 20 and the anchors 30 and coupling the sub-anchors 40 to form the anchor channel 10 after the placement work during the construction of the concrete structure.

The cast-in anchor channel 10 having a sub-anchor according to the present embodiment maintains convenience of the construction by positioning the sub-anchors 40 so as not to interfere in the steel reinforcements placed for constructing the concrete structure. To achieve this, when the sub-anchors 40 are coupled to the stem plates 32 of the anchors 30 as shown in Figs. 11, 13 and 14, the sub-anchors are positioned between placed upper and lower steel reinforcements 100 and 110. As shown in Fig. 12, when the sub-anchors 40 are coupled to the lower surface 24 of the channel 20, the sub-anchors are positioned so as to be engaged with an upper side of the upper steel reinforcement 100.

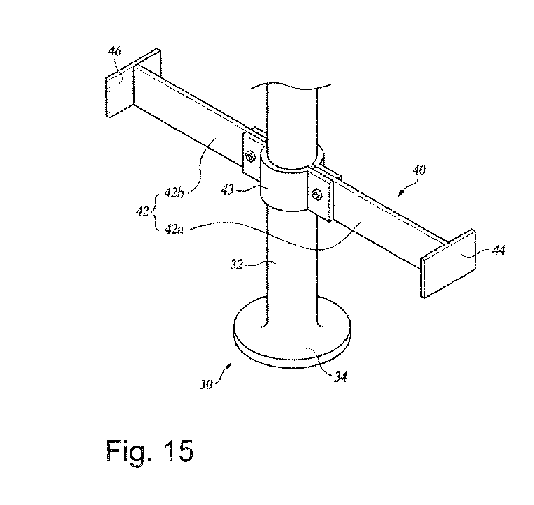

Fig. 15 is a diagram for describing a modification example of the sub-anchor when the cast-in anchor channel having a sub-anchor according to the preferred embodiment of the present invention includes a stud-shaped anchor, and Fig. 16 is a diagram for describing other modification examples of the sub-anchor applied to the anchor channel.

As stated above, the sub-anchor 40 of the cast-in anchor channel having a sub-anchor according to the preferred embodiment of the present invention includes the sub-stem 42 and the sub-anchor head 44, and is coupled in the position under the lower surface 24 of the channel 20. As in the aforementioned example, the sub-stem 42 includes the fastening unit 50 coupled to the lower surface 24 of the channel 20 or the anchor 30 at the one end or the middle portion thereof, and the fastening unit 50 may be completely fixed through welding, or has a detachable structure using a fastening tool such as a bolt and a nut.

From Figs. 15 and 16, it can be seen that the types of the sub-stem 42 and the fastening unit 50 thereof may be various types such as a detachable type unlike the aforementioned integrated type. That is, Fig. 16 shows a case where the sub-stem 42 includes a first sub-stem 42a and a second sub-stem 42b by extending in both directions with the stem plate 32 of the anchor 30 as its center and sub-anchor heads 44 and 46 are provided at the first sub-stem 42a and the second sub-stem 42b. In this case, the first sub-stem 42a and the second sub-stem 42b are fixed by a connection bracket 43 coupled to the stem plate 32 of the anchor 30. (a) and (b) of Fig. 16 show an example of a shape when the sub-stem 42 is divided into the first sub-stem 42a and the second sub-stem 42b As shown in Fig. 15.

Meanwhile, (c) and (d) of Fig. 16 show another shape of the sub-stem 42. Unlike the aforementioned example, since the first sub-stem 42a and the second sub-stem 42b are integrally connected by a connection bracket 43', the sub-stem 42 shown in (c) of Fig. 16 has the same structure as that of the sub-anchor 40 extending in the both directions in the present embodiment as a whole, and the stud-shaped sub-anchor heads 46 are formed at both ends. (d) of Fig. 16 shows an example in which the sub-anchor heads 46 are formed by being bent at the both ends of the flat plate-shaped sub-stem 42.

Fig. 17 is a diagram for describing a method of constructing the cast-in anchor channel having a sub-anchor according to the preferred embodiment of the present invention.

In the cast-in anchor channel having a sub-anchor according to the preferred embodiment of the present invention, as shown in Fig. 12, the sub-anchors 40 are basically coupled to the lower surface 24 of the channel 20 and a spacer 200 for fixing a position in a vertical direction is coupled. In this case, after the placement work of the steel reinforcements is finished, the cast-in anchor channel 10 in the state shown in (b) of Fig. 17 is installed within the placed steel reinforcements, and the anchor channel is fixed to the steel reinforcement with a connection wire.

Meanwhile, in the cast-in anchor channel having a sub-anchor according to another preferred embodiment of the present invention, the sub-anchor 40 is a detachable type, and after a position of the space 200 in the vertical direction is fixed by coupling the sub-anchor to the anchor 30 and providing the sub-anchor within the steel reinforcements, a position in a horizontal direction is fixed by additionally using the sub-anchors 40. Thus, since the anchor channel is independently fixed to the placed steel reinforcement, it is easy to construct the anchor channel, and the construction in the field is quickly performed with a simple construction method.

As described above, the method of constructing the anchor channel is performed by forming the anchor channel 10 such that the sub-anchors 40 can be detachaed from the channel 20 or the anchors 30. Accordingly, the method of constructing the anchor channel according to the present embodiment starts from a step of preparing for the anchor channel 10' including the anchors 30 extending toward the lower surface 24 of the channel 20, and the sub-anchors 40 arranged in parallel with a direction of the shear load applied in the position under the lower surface 24 of the channel 20. A step of placing the upper and lower steel reinforcements 100 and 110 for pouring the concrete is performed while the anchor channel 10' and the sub-anchors 40 are prepared. As shown in (a) of Fig. 17, a step of fixing the position of the anchor channel 10' in the vertical direction by coupling the spacer 200 to the anchors 20 of the anchor channel 10' is performed. As shown in (b) of Fig. 17, a step of fixing the position of the cast-in anchor channel 10 having a sub-anchor in the horizontal direction by coupling the sub-anchors 40 to any one of the lower surface 24 of the anchor channel 10' and the anchors 30 to form the cast-in anchor channel 10 having a sub-anchor and fixing the anchor channel to the upper steel reinforcement 100 with an iron wire in the present embodiment in which the sub-anchors 40 are fixed to the placed steel reinforcements is performed. A step of pouring and curing the concrete that is generally performed is performed.

In the method of constructing the cast-in anchor channel having a sub-anchor according to the preferred embodiment of the present invention, it is possible to effectively solve various problems occurring in the work by using an auxiliary material (wooden lumber) for fixing the position of the anchor channel according to the related art.

Although the cast-in anchor channel having a sub-anchor and the construction method thereof according to the preferred embodiments of the present invention have been illustrated in conjunction with the aforementioned description with reference to the drawings, these embodiments are merely examples. It should be understood to those skilled in the art that various changes and modifications are possible within the scope without departing from the technical spirit of the present invention.

### [Mode for Invention]

Figs. 8 and 9 are diagrams for describing a cast-in anchor channel having a sub-anchor according to the technical spirit of the present invention.

Referring to Fig. 8, the cast-in anchor channel 10 having a sub-anchor according to the technical spirit of the present invention includes the channel 20, the anchors 30 and the sub-anchors 40, and can fix various external installations to the concrete structure in future by being installed before the concrete is poured during the construction of the building.

In the anchor channel 10 according to the present invention described above, the channel 20 includes the upper surface 22, the lower surface 24, and the guide space 21 formed by being open in the upper surface 22 such that the fastening tool of the external installation can be moved in the longitudinal direction, and is installed by being buried in the concrete such that the guide space 21 is exposed to the outside of the concrete. The anchors 30 are coupled to the channel 20 so as to extend toward the lower surface 24 of the channel 20, and resist the tensile load by being buried in the concrete during the pouring of the concrete. The sub-anchor 40 includes the sub-stem 42 and the sub-anchor head 44, the sub-stem 42 is coupled to at least one of the anchor 30 and the lower surface 24 of the channel 20 in the position under the lower surface 24 of the channel 20, and the sub-anchor head 44 is installed at the end of the sub-stem 42.

In this case, the anchor head plate 34 having the upper anchor head function, the stem plate 32 having the stem function and the channel are provided, and the stem plate 32 and the anchor head plate 34 are coupled to each other through welding, as a separate member. The stem plate 32 is coupled to the upper surface of the channel 20 through welding. Since the anchorage performance of the anchor channel 10 described above is improved in view of the structure in comparison with the related art, stable performance is exhibited in coupling the anchor channel to the concrete structure, and anchor channels having various standards are conveniently manufactured by an easy manufacturing method.

In the cast-in anchor channel 10 having a sub-anchor according to the present invention described above, the coupling of the sub-stem 42 to the lower surface 24 of the channel 20 and the anchor 30 is performed through surface contact by forming coupled portions 41 of the sub-stem 42 to the lower surface 24 of the channel 20 and the anchor 30 as a flat surface.

As stated above, in the cast-in anchor channel 10 having a sub-anchor according to the present invention, by using a plate material as the sub-anchor 40 for improving the anchorage performance against the shear load, there are advantages that a more stable structure against the shear load is provided, it is easy to manufacture the sub-anchor 40 and unit price of the product can be reduced in comparison with the related art. That is, in the present invention, the sub-anchor 40 is formed by cutting the plate material provided to have various standards and coupling the plate material by a welding or fastening method, so that structural stabilization is ensured through surface contact, and easiness of manufacturing is ensured. In this case, in the sub-anchor 40, the plate material may be used as the entire sub-stem 42 as in the preferred embodiment of the present invention, and only the coupled portion 41 that comes in close contact with the anchor 30 or the lower surface 24 of the channel 20 may be formed using the flat plate material as in the example of (a) and (c) of Fig. 16.

Referring to Fig. 9, the cast-in anchor channel 10 having a sub-anchor according to the technical spirit of the present invention includes the channel 20, the anchors 30, the sub-anchors 40, and the fastening unit 50 that allows the sub-anchors 40 to be detachably coupled to the anchors 30 and the lower surface 24 of the channel 20 coupled to the sub-anchors 40. In such a configuration, it is easy to construct the anchor channel by being independently fixed to the placed steel reinforcements, and the construction in the field is quickly performed with a simple construction method.

The cast-in anchor channel 10 having a sub-anchor according to the present invention includes the cannel 20, the anchors 30 and the sub-anchors 40, as the same structure as the aforementioned structure, and includes the fastening unit 50 that allows the sub-anchors 40 to be detachably coupled to the anchors 30 and the lower surface 24 of the channel 20 coupled to the sub-anchors 40.

In the present invention, the fastening unit 50 includes a fastening tool 56 in which a coupling structure of a bolt and a nut is applied, such as pins 56a, a bolt 56b, and a nut 56c coupled to holes 52 and 54. That is, in the cast-in anchor channel 10 having a sub-anchor according to the present invention, it is possible to manufacture the sub-anchor 40 that can be detached as a simple structure through a fastening mechanism using the holes, and it is possible to assemble the sub-anchors 40 after an assembly of the channel 20 and the anchor 30 is positioned between the placed steel reinforcements in the field.

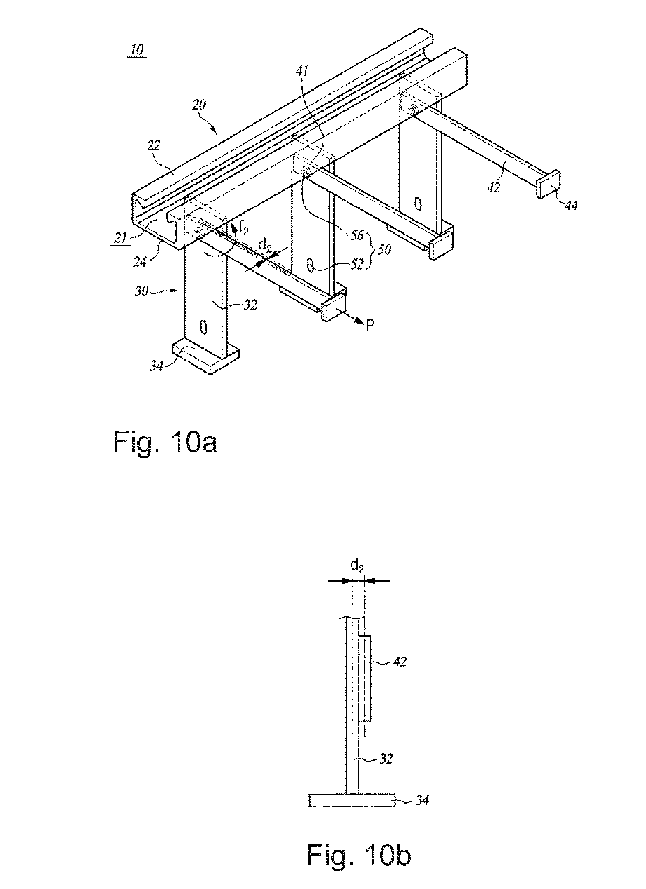

Fig. 10 is a diagram for comparing the cast-in anchor channel having a sub-anchor according to the present invention with the related art, (a) of Fig. 10 is a perspective view of the anchor channel according to the preferred embodiment of the present invention, and (b) of Fig. 10 is a diagram showing a cross section relationship between the stem plate 32 of the anchor 30 and the sub-stem 42 of the sub-anchor 40 in (a) of Fig. 10.

Referring to Fig. 10, in the cast-in anchor channel 10 having a sub-anchor according to the present invention, the coupling of the coupled portions 41 is performed through surface contact by forming the coupled portions 41 as a flat surface unlike the related art shown in Fig. 6. In such a configuration, in the cast-in anchor channel 10 having a sub-anchor according to the present invention, since a torque moment T₂ occurring in the stem plate 32 of the anchor 30 due to a load P applied to the sub-anchor 40 is considerably less than a torque moment T₁ occurring in the stem 2 of the anchor due to the load P applied to the crossing anchor 7' of the anchor channel 6" shown in Fig. 6, there is an advantage that the anchor channel has stability in view of structure and withstands a higher shear load. That is, a moment T₂ (= P x d₂) occurring in the stem 32 of the anchor 30 of the present invention is considerably less than a moment T₁ (= P x d₁) occurring in the stem 2 of the anchor of the related art shown in Fig. 6 (since d₂ has a considerably smaller value than a diameter d₁ of a bar steel, a considerably small torque moment with respect to the same load P occurs).

Particularly, when the cast-in anchor channel 10 having a sub-anchor according to the present invention is configured as a detachable type using the fastening tool 50 of the bolt and the nut, a coupling work is convenient, and when tensile force is applied to the sub-anchor 40 in a certain direction, torque hardly occurs in the coupled portion. Since the coupled portion 41 is not easily rotated or destructed, there is an advantage that the anchor channel has high coupling strength.

### [Industrial Applicability]

According to the cast-in anchor channel having a sub-anchor according to the present invention, since the anchor 30 for resisting the tensile load and the improved sub-anchor 40 for resisting the shear load are provided, the anchorage ability of the anchor channel 10 is improved, and thus, it is possible to effectively prevent the concrete breakout in a direction of the shear load. Particularly, since the improved sub-anchor 40 as a unit for exhibiting the anchorage performance against the shear load is provided in addition to the existing anchorage ability against the tensile load in comparison with the related art, it is possible to more effectively prevent the concrete breakout occurring during the coupling of the anchor channel to the concrete structure such as concrete breakout, anchor pulling-out, side-face blowout, concrete pry-out or splitting. According to the present invention, since the plate material is used as the sub-anchor 40 for improving the anchorage performance against the shear load, there are advantages that a more stable structure against the shear load is provided, it is easy to manufacture the sub-anchor 40, and the unit price of the product can be reduced in comparison with the related art. When the cast-in anchor channel having a sub-anchor according to the present invention is configured such that the sub-anchor 40 is detachably coupled to the channel 20 or the anchor 30, by fixing the position in the vertical direction due to the use of the space 200 and fixing the position in the horizontal direction due to the use of the sub-anchor 40, it is easy to construct the anchor channel by independently fixing the anchor channel in the placed steel reinforcements, and the construction in the field is quickly performed with a simple construction method.

## Claims

1. An anchor channel having a sub-anchor that fixes various external installations to a concrete structure in future by being installed before concrete is poured during construction of a building, the anchor channel comprising:
a channel (20) that includes an upper surface (22), a lower surface (24), and a guide space (21) formed by being open in the upper surface (22) such that a fastening tool of the external installation is moved in a longitudinal direction, and is installed by being buried in the concrete such that the guide space 21 is exposed to the outside of the concrete;
an anchor (30) that is coupled to the channel (20) so as to extend toward the lower surface (24) of the channel (20), and resists a tensile load by being buried in the concrete during the pouring of the concrete; and
a sub-anchor (40) that includes a sub-stem (42) which is coupled to at least one of the anchor (30) and the lower surface (24) of the channel (20) in a position under the lower surface (24) of the channel (20), and a sub-anchor head (44) which is installed at an end of the sub-stem (42), and resists a shear load by being buried in the concrete during the pouring of the concrete,
wherein coupling of the sub-stem (42) to the lower surface (24) of the channel (20) and the anchor (30) is performed through surface contact by forming coupled portions (41) of the sub-stem (42) to the lower surface (24) of the channel (20) and the anchor (30) as a flat surface.

2. The anchor channel having a sub-anchor according to claim 1,
wherein the sub-stem (42) is made of an integrated plate material.

3. The anchor channel having a sub-anchor according to claim 2,
wherein the anchor (30) includes a stem plate (32) that is made of a plate material and is vertically coupled to the lower surface (24) of the channel (20) through welding, and
the sub-stem (42) is coupled to the stem plate (32) of the anchor (30).

4. The anchor channel having a sub-anchor according to claim 1 or 2, further comprising:
a fastening unit (50) that allows the sub-anchor (40) to be detachably coupled to the lower surface (24) of the channel (20) and the anchor (30) coupled to the sub-anchor (40).

5. The anchor channel having a sub-anchor according to claim 4,
wherein the fastening unit (50) includes
a first hole (52) that is formed in the anchor (30) and the lower surface (24) of the channel (20),
a second hole (54) that is formed in the sub-stem (42) so as to correspond to the first hole (52), and
a fastening tool (56) that allows the sub-stem (42) to be coupled to the channel (20) or the anchor (30) by fixing the sub-stem (42) to the lower surface (24) of the channel (20) or the anchor (30) through the first hole (52) and the second hole (54).

6. An anchor channel having a sub-anchor that fixes various external installations to a concrete structure in future by being installed before concrete is poured during construction of a building, the anchor channel comprising:
a channel (20) that includes an upper surface (22), a lower surface (24), and a guide space (21) formed by being open in the upper surface (22) such that a fastening tool of the external installation is moved in a longitudinal direction, and is installed by being buried in the concrete such that the guide space (21) is exposed to the outside of the concrete;
an anchor (30) that is coupled to the channel (20) so as to extend toward the lower surface (24) of the channel (20), and resists a tensile load by being buried in the concrete during the pouring of the concrete;
a sub-anchor (40) that includes a sub-stem (42) which is coupled to at least one of the anchor (30) and the lower surface (24) of the channel (20) in a position under the lower surface (24) of the channel (20), and a sub-anchor head (44) which is installed at an end of the sub-stem (42), and resists a shear load by being buried in the concrete during the pouring of the concrete; and
a fastening unit (50) that allows the sub-anchor (40) to be detachably coupled to the lower surface (24) of the channel (20) and the anchor (30) coupled to the sub-anchor (40).

7. The anchor channel having a sub-anchor according to claim 6,
wherein the fastening unit (50) includes
a first hole (52) that is formed in the anchor (30) and the lower surface (24) of the channel (20),
a second hole (54) that is formed in the sub-stem (42) so as to correspond to the first hole (52), and
a fastening tool (56) that allows the sub-stem (42) to be coupled to the channel (20) or the anchor (30) by fixing the sub-stem (42) to the lower surface (24) of the channel (20) or the anchor (30) through the first hole (52) and the second hole (54).

8. The anchor channel having a sub-anchor according to claim 7,
wherein the first hole (52) and the second hole (54) are formed in coupled portions 41
of the sub-stem (42) to the lower surface (24) of the channel (20) and the anchor (30), and
coupling of the sub-stem (42) to the lower surface (24) of the channel (20) and the anchor (30) is performed through surface contact by forming the coupled portions (41) as a flat surface.
